(19) Europäisches Patentamt / European Patent Office / Office européen des brevets

(11) **EP 3 954 973 B1**

(12) **EUROPEAN PATENT SPECIFICATION**

(45) Date of publication and mention
of the grant of the patent:
**14.02.2024 Bulletin 2024/07**

(21) Application number: **20386039.0**

(22) Date of filing: **10.08.2020**

(51) International Patent Classification (IPC):
***G01D 5/20*** *(2006.01)*

(52) Cooperative Patent Classification (CPC):
**G01D 5/2046;** G01D 2205/73; G01D 2205/77;
G01D 2205/774

(54) **AN INDUCTIVE POSITION SENSOR WITH ASYMMETRIC TARGET**

INDUKTIVER POSITIONSSENSOR MIT ASYMMETRISCHEM TARGET

CAPTEUR DE POSITION INDUCTIF À CIBLE ASYMÉTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.02.2022 Bulletin 2022/07**

(73) Proprietor: **Melexis Technologies SA**
**2022 Bevaix (CH)**

(72) Inventors:
• **LUGANI, Lorenzo**
**2022 Bevaix (CH)**
• **PASSERAUB, Philippe**
**1202 Geneva (CH)**

• **SCHOINAS, Spyridon**
**1202 Geneva (CH)**
• **KLUGE, Wolfram**
**01109 Dresden (DE)**
• **KLEINER, Bernhard**
**01109 Dresden (DE)**

(74) Representative: **Winger**
**Hundelgemsesteenweg 1116**
**9820 Merelbeke (BE)**

(56) References cited:
DE-A1-102014 006 420    DE-T2- 69 636 712
DE-T2- 69 810 504    DE-T2-602004 012 649
US-A1- 2008 319 703

## Description

## Field of the invention

The invention relates to the field of position sensors. More specifically it relates to the field of position sensors which are configured for detecting the position of a target in an inductive way.

## Background of the invention

Inductive position sensors are using a magnetic field for determining the position of a target. An example of such a position sensor is explained in WO2014029885A1. It discloses a method and device for determining an angular position less than 360°, using a magnetic field. The angular position of a rotor is determined with respect to a stator. A magnetic source is mounted on the rotor for creating a magnetic field. The magnetic source is a multi-pole magnet having at least 4 magnet poles which provides a periodically repetitive magnetic field pattern with respect to the rotation axis. By having a multi-pole magnet with at least 4 magnet poles a more accurate positioning may be obtained. A sensor is mounted on the stator. The sensor comprises a plurality of sensor elements for measuring at least one magnetic field component of the magnetic field and for providing a measurement signal indicative of the at least one magnetic field component.

DE602004012649 relates to a rotation angle sensor comprising a rotor which is shaped in a special arc so that salient poles of the rotor cause a period of change in the gap permeability. Ranges of salient poles are provided that have different pole numbers from each other.

DE102014006420A1 aims to improve conventional angle sensors which are sensitive to an axial offset caused by a high axial load. In DE102014006420A1 an angular error caused undesired axial offset between rotor and stator is decreased by having a magnetic field which is in the axial direction.

In DE69636712T2 coupling variations between primary and secondary windings on the stator and a predetermined inductance distribution of the secondary windings is used to determine a rotational position of the rotor which has an eccentric shape so as to cause variations in magnetic coupling resulting in a sine and cosine function with the same period.

DE69810504T2 relates to a device for use in a position transmitter which detects the relative position between two elements. Conductive traces are superimposed and interconnected and arranged so that by a common electromagnetic field at least two signals are generated which act against each other. Part of the traces are arranged in a first layer and part of the traces are arranged in a second layer.

US2008319703A1 proposes a position sensor with an improved accuracy when the target is moving fast. The estimator of the sensor of US2008319703A1 takes account of the fact that at least the speed of the target is not zero during the observation period to establish the estimate of the position and speed of the target. Thus a longer observation period can be used than that of the existing sensors. This allows to have an improved position accuracy of a fast moving target.

Typically, traditional inductive sensors are relatively large in size and in most cases they are designed in a way to fit multiple electrical periods within one full mechanical rotation. The combination of these two features makes them very robust against mechanical tolerances. The reasons behind such an inductive position sensor design are the following:

- large sensor dimensions reduce the sensitivity to off-axis misalignment because what matters is the ratio between the off-axis magnitude and the coil dimensions,
- having multiple electrical periods provides an averaging effect that, in nominal position, cancels out the effect of tilt.

Such an inductive position sensor design, however, implies some major drawbacks. Especially when used as position sensor of a motor.

Firstly, the sensor size becomes relatively big compared to the motor size (e.g. a few cm), meaning that some applications can't use them due to space constraints.

Secondly, applications that require a full scale of 360 degrees can not benefit from the availability of multiple electrical periods and therefore suffer from strong sensitivity to mechanical tolerances, in particular tilt.

There is therefore a need for inductive position sensors which overcome at least one of these drawbacks and preferably both of these drawbacks.

## Summary of the invention

It is an object of the present invention to provide a good inductive position sensor.

The above objective is accomplished by a method and device according to the present invention.

The present invention relates to an inductive position sensor for detecting the angular position of a rotatable target as defined in claim 1.

The inductive position sensor being configured for determining the angular position of the target from the first and second signal.

It is an advantage of embodiments of the present invention that the robustness to mechanical tolerances is increased. This is achieved by providing an asymmetric target and by providing at least two receive coils that read the reflected magnetic field pattern with the first period and with the second period. Thus, two position indication signals can be obtained of which one has a larger period than the other. The one with the smallest period is more robust against mechanical misalignment than the one with the larger period. The one with the largest period enables shifting the position indication signal with the smallest period, and hence, allows to increase the range of the position sensor. It is an advantage of embodiments of the present invention that this robustness can be improved without significantly increasing the dimensions of the position sensors.

It is, moreover, an advantage of embodiments of the present invention that the second position indication signal is continuously changing as a function of the position of the target. Thus, as from the initial measurements, both the first position indication signal and the second position indication signal are derived, and combined to obtain the position of the target.

The present invention also relates to a method for detecting the angular position of a rotatable target as defined in claim 13.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

## Brief description of the drawings

FIG. 1 shows a schematic drawing of an inductive position sensor in accordance with embodiments of the present invention.
FIG. 2 shows a schematic drawing of the separate components of the inductive position sensor in FIG. 1, wherein the target and the coils are drawn next to each other.
FIG. 3 shows the signals induced by the inner part of the asymmetric target in the first coil configuration, in an exemplary inductive position sensor of the present invention.
FIG. 4 shows the signals induced by the outer part of the asymmetric target in the second coil configuration, in an exemplary inductive position sensor of the present invention.
FIG. 5 shows typical examples of a first angle and of a second angle obtained using an exemplary inductive position sensor of the present invention.
FIG. 6 to FIG. 8 show asymmetric target configurations, making use of Eddy currents, in accordance with embodiments of the present invention.
FIG. 9 to FIG. 11 show asymmetric target configurations, based on PCB tracks, in accordance with embodiments of the present invention.
FIG. 12 shows a coil configuration of independent coils, in accordance with embodiments of the present invention.
FIG. 13 shows two different coils, each composed of 2 loops, made of PCB tracks, in accordance with embodiments of the present invention.
FIG. 14 shows six different coils, each composed of 2 loops, made of PCB tracks, in accordance with embodiments of the present invention.

Any reference signs in the claims shall not be construed as limiting the scope. In the different drawings, the same reference signs refer to the same or analogous elements.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under, covering and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising" or "composed of", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention periods are compared, the angular periodicity is compared. The intensity of the magnetic field pattern has a periodicity in the angular direction composed of a first period and of a second period. The first period and second period may for example be expressed in radians or degrees or in time.

The present invention relates to an inductive position sensor 100 for detecting the angular position of a rotatable target 110.

An inductive position sensor 100, in accordance with embodiments of the present invention comprises at least one transmit coil 120 for generating an alternating magnetic field.

The inductive position sensor 100, moreover, comprises an asymmetric target 110 which is arranged such that, when the asymmetric target is excited by the alternating magnetic field of the at least one transmit coil 120, it generates a reflected magnetic field pattern of which the intensity has a periodicity in the angular direction which is composed of a first period and a second period, wherein the second period is larger than the first period.

The inductive position sensor, moreover, comprises at least one first receive coil or set of receive coils 130 configured to be responsive to the first period of the magnetic field pattern, thus inducing a first signal which varies continuously with the first period as a function of the angular position of the target, and at least one second receive coil or set of receive coils 140 configured to be responsive to the second period of the magnetic field pattern, thus inducing a second signal which varies continuously with the second period as a function of the angular position of the target.

The inductive position sensor is configured for determining the angular position of the target from the first and the second signal.

The first signal and the second signal may for example be voltages or currents induced in the coils by the magnetic field pattern. The first receive coil or set of receive coils is designed in order to generate a signal proportional to the reflected magnetic field pattern with the first periodicity. The second receive coil or set of receive coils is designed in order to generate a signal proportional to the reflected magnetic field pattern with the second periodicity.

In embodiments of the present invention the asymmetric target has an inner part and an outer part. The inner part has a periodic configuration with the first period in the angular direction. The outer part has a periodic configuration with the second period in the angular direction. The outer part of the asymmetric target may be located within a first and second radius. The first receive coil or set of receive coils may be arranged within the first radius, and the second receive coil or second set of receive coils may be arranged within the first and second radius.

In embodiments of the present invention the inductive position sensor may comprise an integrated circuit 150 electrically connected to the at least one transmit coil 120 for exciting the transmit coil, and electrically connected to the receive coils 130, 140 for obtaining the first signal and the second signal.

The integrated circuit 150 is, moreover, configured for deriving the angular position of the target from these signals.

The integrated circuit 150 may be configured for deriving a first position indication signal from the first signal and a second position indication signal from the second signal, and for combining both position indication signals to obtain the position of the target.

The integrated circuit may comprise a processing module (e.g. microprocessor, FPGA, ASIC) for deriving the angular position of the target from the first and second signal.

In the examples described below, the combination of 180° periodic parts and 360° periodic parts is made. The invention is, however, not limited thereto. The first period and the second period may also have different values, as long as the first period is smaller than the second period. The first signal may thereby be used to determine a first angle and the second signal with the broader range may be used to complement the obtained first angle with an appropriate shift which can be determined from the second angle. The complete range over which the angle can be measured may for example be subdivided in a number of sectors of which each is spanning a range corresponding with the first period. The first angle may specify an angle within such a sector, and the second angle may allow to determine in which sector the rotatable target is positioned.

Combining two inductive position sensors with a different range is not an obvious design choice as it may be assumed that the robustness of one sensor may be degraded by the other sensor. The inventors have, however, solved this problem by providing an asymmetric target which is arranged such that, when excited, the intensity of the reflected magnetic field pattern has a periodicity in the angular direction with a first period and with a second period. The second period is larger than the first period. Receive coils are positioned such that a first signal and a second signal can be measured. Both are varying continuously with a varying position of the target. One with a first period and one with a second period. As, in embodiments of the present invention, the first and second signal change with a change of the angular position of the target, already from the first degrees of rotation the position of the target can be estimated. This may be achieved by providing a fist receive coil which is sensitive to the first period and a second receive coil which is sensitive to the second period. The target typically at least partly overlaps the first and second receive coil for all angular positions of the target. Typically the position indication obtained from the first signal has a larger resolution than the position indication obtained from the second signal. The resolution obtained using the first signal may for example range between 0.01° and 1°, for example between 0.05° and 0.5°. The resolution obtained using the second signal may for example range between 1° to 20° as bottom limit and half of the first period for the top limit. By combining both, the range can be extended and the highest resolution can be maintained.

The first period may for example be a 180° period and the second period a 360° period. From the first signal a 180° periodic angle may be derived and from the second signal it may be determined if the rotational angle is below or above 180° by means of a calculation combining the first and second signal.

It was found by the inventors that the combination of a 180° inductive position sensor with a 360° inductive position sensor, in accordance with embodiments of the present invention, results in a position sensor in which the robustness of the 180° position sensor is maintained. This is not straightforward as one would assume that the 360° part of the sensor would degrade the robustness of the 180° part of the sensor and vice versa that the 180° part of the sensor would induce mistakes in the 360° part of the sensor.

The purpose of the periodicity with the first period (e.g. 180°) is to provide an angular signal that is robust against mechanical misalignment between target and coil sensor PCB. The purpose of the periodicity with the second period (e.g. 360°) is then to complement the first period with an appropriate shift depending on the second signal. In case of 180° and 360° periods, depending if the rotational angle of the target is below or above 180°.

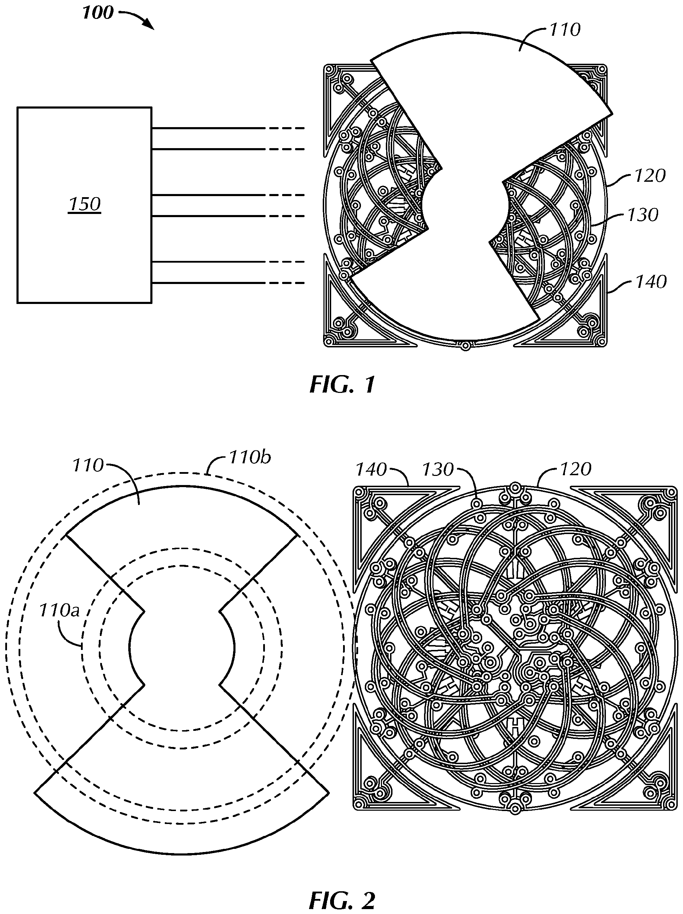

More in detail, the sensor may be composed of the following parts, which can be identified with the help of the embodiment shown in FIG. 1 which illustrates a 180°/360° sensor:

One or multiple transmit coils 120. The transmit coil is excited by an oscillator circuitry in order to produce an AC magnetic field which is used for excitation of the target.

An asymmetric target 110. in this example the asymmetric target can be decomposed into a 180° periodic part and a 360° periodic part. As a consequence, when excited by the transmit coil field, the target 110 will in turn generate a magnetic field whose pattern can be decomposed in a 180° period and a 360° periodic component.

In embodiments of the present invention the target may be made out of metal piece, in that case the transmit coil field will excite eddy currents in it.

Alternatively, the target may be made out of a PCB track and eventually complemented with passive components like resistors and/or capacitors and/or inductors in order to form a resonant coil. Another possibility would be to have a target made out of magnetic material, either conductive or not, which is magnetized by the transmit coil field. Any combination of the 3 possibilities seen above is also possible. In embodiments of the present invention the target may comprise a conductive piece. The target may for example be made out of a metal piece. In the embodiment of FIG. 1 the target is a metal slab.

In embodiments of the present invention the asymmetric target may be arranged such that, when the asymmetric target is excited by the alternating magnetic field of the at least one transmit coil 120, it generates a reflected magnetic field pattern of which the intensity has a periodicity with a first period in the angular direction in a first region and of which the intensity has a periodicity with a second period in the angular direction in a second region. As will be shown in the examples below in some embodiments of the present invention the first region may be different from the second region, while in other embodiments they may be the same.

In embodiments of the present invention at least some part of the first and second receive coils is covered by the target. Thus, when rotating the target it will induce a signal in the first and second receive coils which is varying with the position of the target.

This is also the case in FIG. 1 where part of the first receive coils 130 is covered by the 180° periodic part of the target and part of the second receive coils is covered by the 360° periodic part of the target. In FIG. 2 the same target and coils are shown, but the target is shown separately from the coils such that the coils are clearly visible. In this graph the first region 110a and the second region 110b are indicated with dashed lines. When the asymmetric target is excited by an alternating magnetic field by the transmit coil 120, this will result in an excited magnetic field pattern of which the intensity (in the axial direction) has a first angular period in the first region and a second angular period in the second region.

In embodiments of the present invention the first set of receive coils may comprise at least 2 coils, each of which comprises at least 2 loops. One loop spirals in a clockwise sense, and one loop spirals in an anticlockwise sense.

In embodiments of the present invention the second set of receive coils may comprise at least 2 coils, each of which comprises at least 2 loops, wherein one loop spirals in a clockwise sense, and one loop spirals in an anticlockwise sense. In embodiments of the present invention the second set of receive coils may be located between the first radius and the second radius.

The first set of receiving coils 130, in the exemplary embodiment illustrated in FIG. 1, are shaped in a way to be responsive to only the 180° component of the magnetic field. In the embodiment of FIG. 1 and 2, this coil set is composed of 3 coils, each of which is composed of 4 loops. These 4 loops are separated by 90° and alternatively spiral in the clockwise and anticlockwise sense. This makes the receive coil 180° periodic, and so able to respond to the 180° periodic component of the target magnetic field. In particular, the 180° component of the target magnetic field will induce a net voltage in each of the 3 receiving coils. Note that it is not strictly necessary that the receive coils contain 4 loops. The receive coils may for example contain 2 loops.

The second set of receiving coils, in this exemplary embodiment of the present invention, are shaped in a way to be responsive to the 360° component of the target magnetic field. In FIG. 1 and FIG. 2, this coil set is composed of 2 coils, each composed of two loops sitting at diametrically opposite positions and connected in anti-series, so that if the first loop runs clockwise, then the other loop runs counterclockwise. In this way, these receiving coils have the right symmetry to respond to the 360 component of the target magnetic field, and not to the 180 deg periodic component.

Alternatively the loops may be independent and subtraction of voltages may be done by the IC.

In the exemplary embodiment, illustrated in FIG. 1, the inductive position sensor comprises an IC 150. The IC is connected to the transmit coil 120 in order to provide excitation. The IC is also connected to the various receiving coils and reads the signal (which may be a voltage or current) induced by the target magnetic field. Based on the generated signals, the IC is able to compute the target rotational angle over the full 360 deg range.

This may for example be done as follows:

- a 180° periodic angle, varying between 0 and 180° during a full rotation is obtained from the signals of the first coil set. This is an accurate angle, which is less sensitive to mechanical tolerance than the angle obtained from the second signal. If the angle calculation, based on the first signal, provides as output the angle alpha, it is not possible to know if the target rotational angle is alpha or alpha+180.

- a 360° periodic angle may be computed from the signals of the second coil set. This angle may have a smaller angle than the angle obtained using the first signal. It has, however, a broader range and therefore allows to broaden the overall range of the position sensor compared to a sensor which only operates at the first periodicity. In this example the 360° periodic angle is used to determine if the previously calculated 180° periodic angle needs to be complemented by 180° or not.

This may for example be achieved by comparing the two angles. In particular the absolute value of their difference may be considered:

- If the difference is lower than 90°, then the angle from the 180° periodic coilset is correct and the position sensor may directly output that result;
- If the difference is bigger than 90°, then the sensor output will be the 180° periodic angle plus 180 degrees.

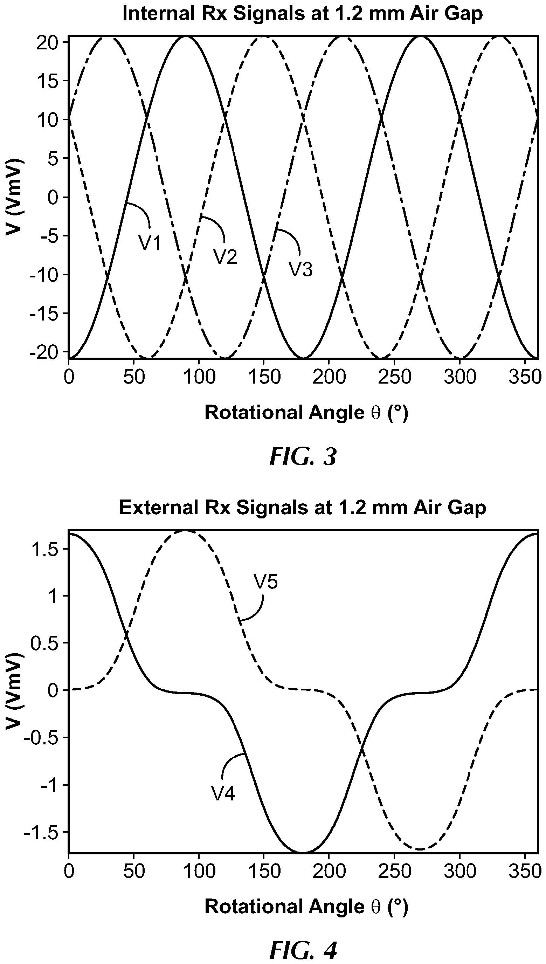

The graph in FIG. 3 shows the first signals (v1, v2, v3) after removal of the offset. The offset is obtained by measuring the signals without the presence of a target. The first signals vary continuously with the first period. These are the signals induced by the inner part of the asymmetric target in the first receive coils. This signals are obtained from an inductive position sensor with a 1.2 mm air gap between the target and the coils.

The graph in FIG. 4 shows the second signals (v4, v5) after removal of the offset. The second signals vary continuously with the second period. These are the signals induced by the outer part of the asymmetric target in the second receive coils.

The 180° periodic angle may for example be calculated as follows:

$$\alpha_{180} = \arctan2(\sqrt{3}(v_1-v_2),\ 2v3-v_1-v_2)\ /\ 2$$

The background of the formula, is based on the Clarke transformation and is explained here below.

Starting with a triphase signal set: v1, v2, v3.

First the common mode is removed before retrieving the two quadrature signals. The common mode is CM=(v1+v2+v3)/3.Therefrom, the following signal set can be obtained:

$$v1' = v1-CM$$

$$v2' = v2-CM$$

$$v3' = v3-CM$$

Therefrom the two in-phase and quadrature components can be obtained:

$$C = v3'$$

$$S = (v1'-v2')/\sqrt{3}$$

From these components the angle can be obtained as alpha = atan(S/C)/2. The factor ½ is needed as the output of the 180° sensor varies between 0° and 360° on a 180° range. If the arctan formula is rewritten using only the v1, v2, v3 variables, the following equation is obtained:

$$\alpha_{180} = \arctan2(\sqrt{3}(v_1-v_2), 2v3-v_1-v_2) / 2$$

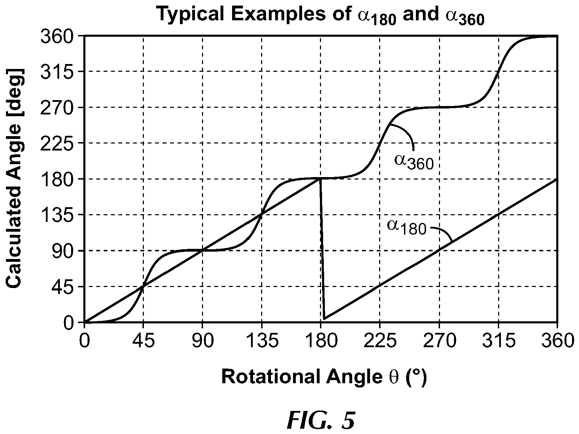

An example of such an angle $\alpha_{180}$ as a function of the angular position of the target is shown in FIG. 5.

The 360° periodic angle may for example be calculated as follows:

$$\alpha_{360} = \arctan2(v_4, v_5)$$

An example of such an angle $\alpha_{360}$ as a function of the angular position of the target is shown in FIG. 5.

In an exemplary embodiment of the present invention the following phase margins may be calculated:

$$m_1 = \alpha_{360} - \alpha_{180} - 180°$$

$$m_2 = \alpha_{360} - \alpha_{180}$$

$$m_3 = \alpha_{360} - \alpha_{180} + 180°$$

The following conditions may be evaluated:

If $|m_1|$ is minimum then $\alpha = \alpha_{180} + 180°$

If $|m_2|$ is minimum then $\alpha = \alpha_{180}$

If $|m_3|$ is minimum then $\alpha = \alpha_{180} - 180°$

It is an advantage of embodiments of the present invention that a miniaturized 360° capable sensor with good robustness to mechanical tolerances can be realized. The approach consists in a sensor based on an asymmetric target that can provide a field pattern containing at the same time a first periodic component (e.g. 180°) and a second periodic component (e.g. 360°). The sensor contains 2 sets of receiving coils that read the two components of the target magnetic field and the angle is calculated on the basis of the two received signals sets. The purpose of the first periodic part is to provide an angular signal that is robust against mechanical misalignment between target and coil sensor PCB. The second periodic part is then used to complement the obtained angle of the first periodic part with an appropriate shift.

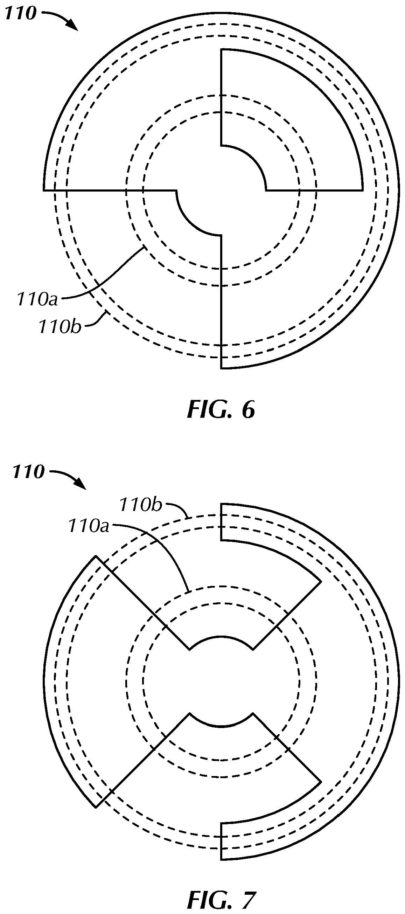

The target shape of the asymmetric target is not limited to the shape illustrated in FIG. 1 and 2. For example FIGs. 6, 7, and 8 show alternative target shapes, that comprise a 180° and a 360° periodic part based on a generated asymmetric eddy current pattern. In FIG. 6 and FIG. 7 the shape of the target is such that it has a 180° periodicity in the first region 110a and a 360° periodicity in the second region 110b.

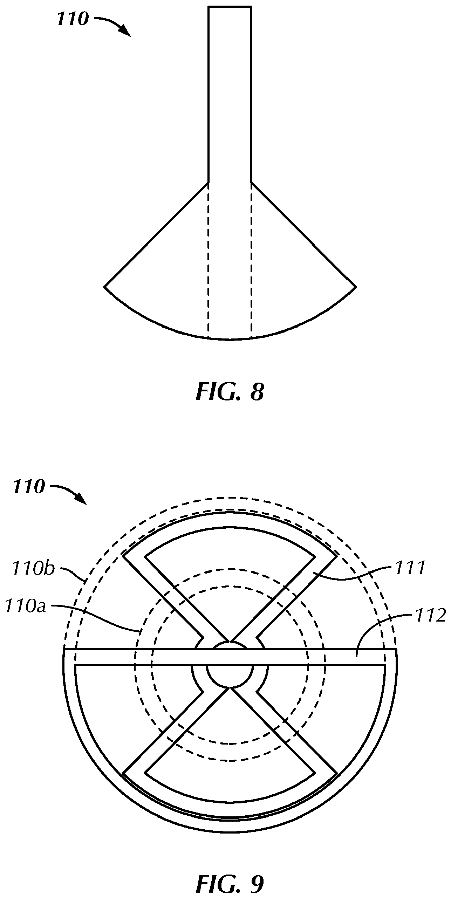

In FIG. 8 the 180° periodicity is rectangular shaped part of the target. The 360° periodicity is obtained by the triangular shaped parts of the target which are neighboring the rectangular shape. The target is not limited to these shapes as long as it is arranged suct the the reflected magnetic field pattern has at least the two periods.

FIGs. 9, 10, and 11 show targets obtained from a PCB track. These targets provide an additional signal based on resonance or eddy currents with a directed current flow on a track rather than eddy current flow on a bigger surface. All targets in these examples can be described as a combination of 180° periodic and 360° periodic parts in respectively the first region 110a and the second region 110b.

In FIG. 9 a first track 111 has a rotational periodicity of 180° for both regions 110a, 110b and a second track 112 has a rotational periodicity of 360°.

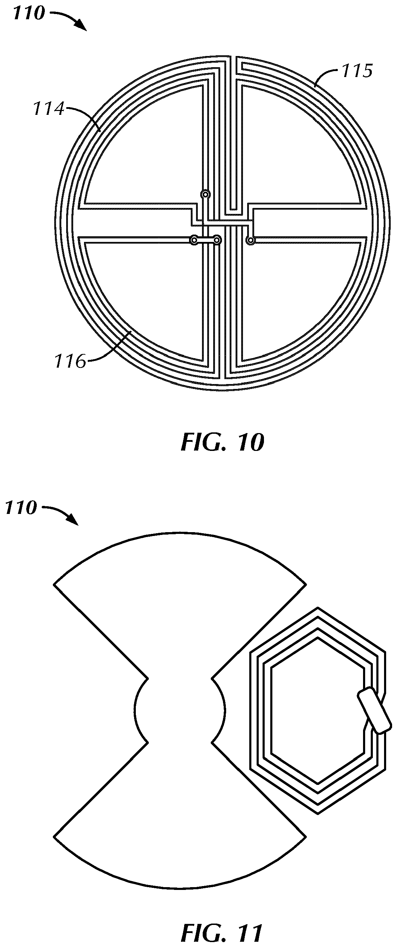

Also, in FIG. 10 the target is made of PCB tracks. An inner track 116 composed of 4 turns turning alternatively clockwise and counterclockwise, will generate, in operation, the 180° periodic field. An intermediate track 114 composed of two D-shaped loops turning in opposite senses, will generate, in operation, the 360° periodic field. An outer circular track 115 is present for having a non-zero coupling to the transmit coil.

Different coil configurations may be used for the first and second receive coil or set of receive coils. For example, the coils composing the second coil set of FIG.

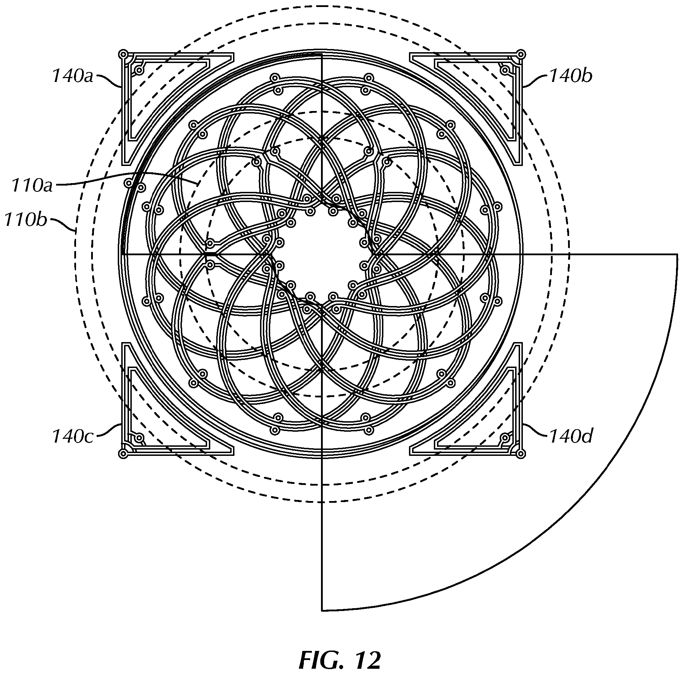

1 and FIG. 2 must not be connected in anti-series. Instead of having two coils each made of 4 loops, the coil set could also be composed of 4 independent coils 140a, 140b, 140c, 140d, each comprising only one loop. This is illustrated in FIG. 12. Subtraction of the 2 voltages may be performed by an IC.

Another important point is that the two sets of coils are not necessarily defined in the physical wiring of the PCB tracks.

In embodiments of the present invention the at least one first receive coil or set of receive coils and the at least one second receive coil or set of receive coils may be composed of independent sets of coils.

This is, however, not strictly necessary. In some embodiments of the present invention at least some of the coils are shared between the first set of receive coils and the second set of receive coils. In some embodiments of the present invention the first receive coil or set of receive coils may even be the same as the second receive coil or set of receive coils.

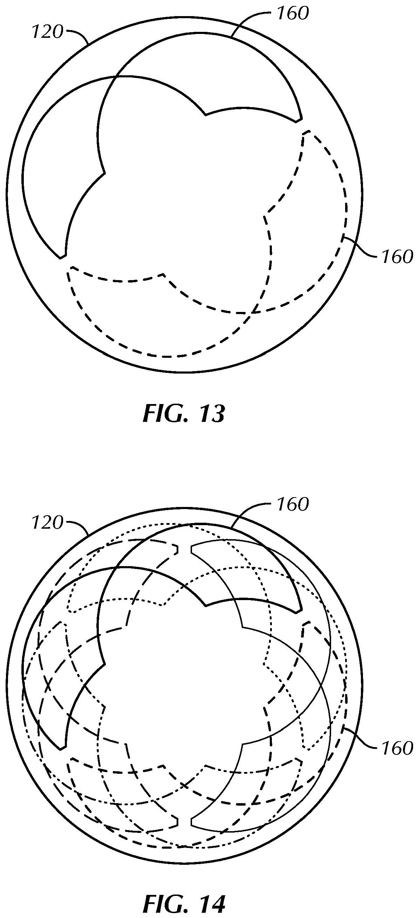

For example, FIG. 13 shows two different coils, each composed of 2 loops. A first coil represented by a solid line and a second coil represented by a dashed line. A signal v1 is induced in the first coil and a signal v2 is induced in the second coil. By making the sum of the signals v1 + v2, a first signal is obtained which has a periodicity of 180° and by making the difference of the signals v1-v2, a second signal is obtained which has a periodicity of 360°.

For example, FIG. 14 shows a system where there are 6 individual coils 160, each composed of two loops, one clockwise and another counterclockwise, separated by 90°. In this embodiment, the IC may be configured read out the signals from the 6 coils and may then internally generate 2 subsets of signals. The first subset of three signals may be generated by the addition of opposite coil signals and used for the 180° periodic angle calculation. The other subset of 3 signals may be generated from differences of opposite coil signals and used for 360° angle calculation.

The number of coils in each subset is also not fixed. For example two or three coils may be used per subset. The invention is, however, not limited thereto.

A first combination of the six coils may be implemented to generate, in operation, a signal with the first periodicity (e.g. 180°) and a second combination of the six coils may be implemented to generate, in operation, a signal with the second periodicity (e.g. 360°). Said first and second combination can be of all the present coils 160 or a sub set and the first and second combination may be composed of the same or a different subset of the coils 160. The first and second combination of said first and second set may also differ on the signal processing od said coils (such as polarity or amplification of the signals) to generate the first and second periodic signals.

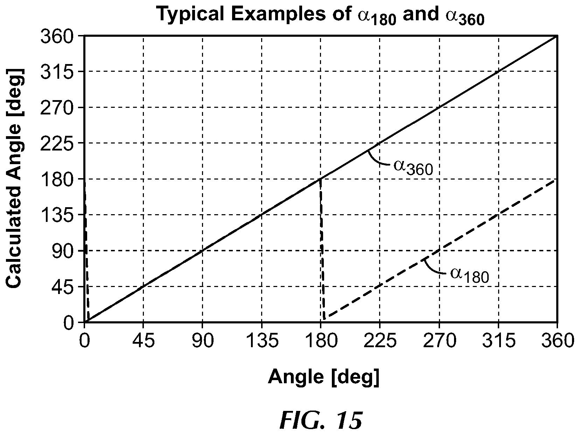

Different algorithms may be used for determining the position of the inductive position sensor from the first and second signal. An example thereof is given earlier in the description. An alternative example is given here below. An alternative algorithm is described here below with the aid of FIG. 15.

In this example the 180° periodic signals after subtraction of the offsets are v1, v2, and v3. The 360° periodic signals after subtraction of the offsets are v4 and v5.

The 180° periodic angle may be calculated as follows:

$$\alpha_{180} = \text{arctan2}(\sqrt{3}(v_1-v_2), v_1+v_2-2\cdot v_3) \,/2$$

The 360° periodic angle may be calculated as follows:

$$u = v_4 + v_5\cdot\sin(2\cdot\alpha_{180}) + v_4\cdot\cos(2\cdot\alpha_{180})$$

$$w = v_5 + v_5\cdot\cos(2\cdot\alpha_{180}) - v_4\cdot\sin(2\cdot\alpha_{180})$$

$$\alpha_{360} = \text{arctan2}(u, w)$$

The margins can be calculated as follows:

$$m_1 = \alpha_{360} - \alpha_{180} - 180°$$

$$m_2 = \alpha_{360} - \alpha_{180}$$

$$m_3 = \alpha_{360} - \alpha_{180} + 180°$$

The following conditions may be evaluated:

If $|m_1|$ is minimum then $\alpha = \alpha_{180}+ 180°$
If $|m_2|$ is minimum then $\alpha = \alpha_{180}$
If $|m_3|$ is minimum then $\alpha = \alpha_{180} - 180°$

The first signal may be phase shifted with respect to the second signal or vice versa. It may for example be phase shifted over a degree of 90°. This may for example be achieved using an LC filter.

The present invention also relates to a method for detecting the angular position of a rotatable target, the method comprising:

- exciting an asymmetric target by an alternating magnetic field wherein the asymmetric target is arranged such that, it generates a reflected magnetic field pattern of which the intensity has a periodicity with a first period in the angular direction and with a second period in the angular direction, wherein the second period is larger than the first period,
- detecting the reflected magnetic field pattern thereby obtaining a first signal which varies continuously with the first period as a function of the angular position of the target and a second signal which varied continuously with the second period as a function of the angular position of the target,

- determining the angular position of the target by combining the first and the second signal.

This may for example be achieved by obtaining a first position indication signal from the first signal and a second position indication signal from the second signal. The first position indication signal typically has a higher resolution and smaller range than the second position indication signal. By combining both, an angular position of the rotatable target can be obtained which has an extended range compared to the range of the first position indication signal alone. Typical combinations are given earlier in the description.

**Claims**

1. An inductive position sensor (100) for detecting the angular position of a rotatable target (110), the inductive position sensor (100) comprising:

   - at least one transmit coil (120) for generating an alternating magnetic field in an axial direction, at least one first receive coil or set of receive coils (130, 160), at least one second receive coil or set of receive coils (140, 160),
   - an asymmetric target (110),

   **characterized in that** an inner part of the asymmetric target has a periodic configuration with a first period in the angular direction, and wherein an outer part of the asymmetric target, within a first and a second radius, has a periodic configuration with a second period in the angular direction, such that, when the asymmetric target is excited by the alternating magnetic field of the at least one transmit coil (120), the asymmetric target will in turn generate a magnetic field whose pattern is, a magnetic field pattern which has an intensity, measured in an axial direction, which has a periodicity in the angular direction composed of the first period and of the second period, wherein the second period is larger than the first period,

   - and **characterized in that** the at least one first receive coil or set of receive coils (130, 160) is configured to be responsive to the magnetic field pattern with the first period, thus inducing a first signal which varies continuously with the first period as a function of the angular position of the target, and that the first receive coil or first set of receive coils (130) is arranged within the first radius,
   - and **characterized in that** the at least one second receive coil or set of receive coils (140, 160) is configured to be responsive to the magnetic field pattern with the second period, thus inducing a second signal which varies continuously with the second period as a function of the angular position of the target, and that the second receive coil or second set of receive coils is arranged within the first and second radius,

and that the inductive position sensor is configured for determining the angular position of the target from the first and second signal.

2. An inductive position sensor (100) according to claim 1, wherein the at least one first receive coil or set of receive coils (130, 160) and the at least one second receive coil or set of receive coils (140, 160) have at least one coil which is shared.

3. An inductive position sensor according to any of the previous claims, the inductive position sensor comprising an integrated circuit (150) electrically connected to the at least one transmit coil (120) for exciting the transmit coil, and electrically connected to the receive coils (130, 140) for obtaining the first signal and the second signal, and for deriving the angular position of the target from these signals.

4. An inductive position sensor (100) according to any of the previous claims, wherein the target (110) comprises a conductive piece.

5. An inductive position sensor (100) according to any of the previous claims, wherein the target (110) comprises a PCB track.

6. An inductive position sensor (100) according to claim 5, wherein the target (110), moreover, comprises passive components connected to the PCB track.

7. An inductive position sensor (100) according to any of the previous claims wherein the target comprises magnetic material.

8. An inductive position sensor (100) according to any of the previous claims, wherein the asymmetric target can be decomposed in a 180° periodic part and in a 360° periodic part such that the first period is 180° and the second period is 360°.

9. An inductive position sensor (100) according to any of the previous claims, wherein the first set of receive coils comprises at least 2 coils, each of which comprises at least 2 loops, wherein one loop spirals in a clockwise sense, and one loop spirals in an anticlockwise sense.

10. An inductive position sensor (100) according to any of the previous claims, wherein the second set of receive coils comprises at least 2 coils, each of which comprises at least 2 loops, wherein one loop spirals in a clockwise sense, and one loop spirals in an anticlockwise sense.

11. An inductive position sensor (100) according to claim 10 wherein the loops are connected in anti-series.

12. An inductive position sensor (100) according to any of the claims 8 to 11, wherein the first position indication signal is an angle between 0 and 180° and wherein the second position indication signal is an angle between 0 and 360° and wherein the integrated circuit (150) is configured for taking the absolute value of the difference of both signals and for determining the position of the target as the first position indication signal if the difference is smaller than 90°, and for determining the position of the target as the sum of the first position signal and 180° if the difference is bigger than 90°.

13. A method for detecting the angular position of a rotatable target, the method comprising:

- exciting an asymmetric target by an alternating magnetic field, which in turn generates a magnetic field whose pattern is a magnetic field pattern, detecting the magnetic field pattern, and determining an angular position from the detected magnetic field pattern **characterized in that**
- the asymmetric target is arranged such that, it generates the magnetic field pattern of which the intensity has a periodicity with a first period in the angular direction and with a second period in the angular direction, wherein the second period is larger than the first period, wherein an inner part of the asymmetric target has a periodic configuration with the first period in the angular direction, and wherein an outer part of the asymmetric target, within a first and a second radius, has a periodic configuration with the second period in the angular direction,
- and that detecting the magnetic field pattern implies obtaining a first signal, using a first receive coil or first set of receive coils, which varies continuously with the first period as a function of the angular position of the target and a second signal, using a second receive coil or second set of receive coils, which varies continuously with the second period as a function of the angular position of the target, wherein the first receive coil or first set of receive coils (130) is arranged within the first radius and wherein the second receive coil or second set of receive coils is arranged within the first and second radius,
- and that the angular position of the target is determined by combining the first and the second signal.

**Patentansprüche**

1. Ein induktiver Positionssensor (100) zum Erfassen der Winkelposition eines drehbaren Ziels (110), wobei der induktive Positionssensor (100) Folgendes umfasst:

- mindestens eine Übertragungsspule (120) zum Erzeugen eines alternierenden Magnetfelds in einer axialen Richtung, mindestens eine erste Empfangsspule oder Satz von Empfangsspulen (130, 160), mindestens eine zweite Empfangsspule oder Satz von Empfangsspulen (140, 160),
- ein asymmetrisches Ziel (110),

**dadurch gekennzeichnet, dass** ein innerer Teil des asymmetrischen Ziels eine periodische Konfiguration mit einer ersten Periode in der Winkelrichtung aufweist, und wobei ein äußerer Teil des asymmetrischen Ziels, innerhalb eines ersten und eines zweiten Radius, eine periodische Konfiguration mit einer zweiten Periode in der Winkelrichtung aufweist, sodass, wenn das asymmetrische Ziel durch das alternierende Magnetfeld der mindestens einen Übertragungsspule (120) angeregt wird, das asymmetrische Ziel wiederum ein Magnetfeld erzeugt, dessen Muster ein Magnetfeldmuster ist, das eine Stärke aufweist, gemessen in einer axialen Richtung, die eine Periodizität in der Winkelrichtung aufweist, die aus der ersten Periode und aus der zweiten Periode zusammengesetzt ist, wobei die zweite Periode größer ist als die erste Periode,

- und **dadurch gekennzeichnet, dass** die mindestens eine erste Empfangsspule oder Satz von Empfangsspulen (130, 160) konfiguriert ist, um auf das Magnetfeldmuster mit der ersten Periode zu reagieren, wodurch ein erstes Signal induziert wird, das sich kontinuierlich mit der ersten Periode in Abhängigkeit von der Winkelposition des Ziels ändert, und dass die erste Empfangsspule oder der erste Satz von Empfangsspulen (130) innerhalb des ersten Radius eingerichtet ist,
- und **dadurch gekennzeichnet, dass** die mindestens eine zweite Empfangsspule oder Satz von Empfangsspulen (140, 160) konfiguriert ist, um auf das Magnetfeldmuster mit der zweiten Periode zu reagieren, wodurch ein zweites Signal induziert wird, das sich kontinuierlich mit der zweiten Periode in Abhängigkeit von der Winkelposition des Ziels ändert, und dass die zweite Empfangsspule oder der zweite Satz von Empfangsspulen innerhalb des ersten und zweiten Radius eingerichtet ist,

und dass der induktive Positionssensor konfiguriert ist zum Bestimmen der Winkelposition des Ziels aus dem ersten und zweiten Signal.

2. Ein induktiver Positionssensor (100) nach Anspruch 1, wobei die mindestens eine erste Empfangsspule oder Satz von Empfangsspulen (130, 160) und die mindestens eine zweite Empfangsspule oder Satz von Empfangsspulen (140, 160) mindestens eine Spule aufweisen, die gemeinsam verwendet wird.

3. Ein induktiver Positionssensor nach einem der vorstehenden Ansprüche, wobei der induktive Positionssensor eine integrierte Schaltung (150) umfasst, die elektrisch mit der mindestens einen Übertragungsspule (120) zum Anregen der Übertragungsspule verbunden ist, und elektrisch mit den Empfangsspulen (130, 140) zum Erhalten des ersten und des zweiten Signals und zum Ableiten der Winkelposition des Ziels aus diesen Signalen verbunden ist.

4. Ein induktiver Positionssensor (100) nach einem der vorstehenden Ansprüche, wobei das Ziel (110) ein leitfähiges Bauelement umfasst.

5. Ein induktiver Positionssensor (100) nach einem der vorstehenden Ansprüche, wobei das Ziel (110) eine PCB-Leiterbahn umfasst.

6. Ein induktiver Positionssensor (100) nach Anspruch 5, wobei das Ziel (110) weiter passive Komponenten umfasst, die mit der PCB-Leiterbahn verbunden sind.

7. Ein induktiver Positionssensor (100) nach einem der vorstehenden Ansprüche, wobei das Ziel Magnetmaterial umfasst.

8. Ein induktiver Positionssensor (100) nach einem der vorstehenden Ansprüche, wobei das asymmetrische Ziel in einen 180° periodischen Teil und in einen 360° periodischen Teil zerlegt werden kann, sodass die erste Periode 180° ist und die zweite Periode 360° ist.

9. Ein induktiver Positionssensor (100) nach einem der vorstehenden Ansprüche, wobei der erste Satz von Empfangsspulen mindestens 2 Spulen umfasst, die jeweils mindestens 2 Wicklungen umfassen, wobei sich eine Wicklung im Uhrzeigersinn windet und eine Wicklung sich gegen den Uhrzeigersinn windet.

10. Ein induktiver Positionssensor (100) nach einem der vorstehenden Ansprüche, wobei der zweite Satz von Empfangsspulen mindestens 2 Spulen umfasst, die jeweils mindestens 2 Wicklungen umfassen, wobei sich eine Wicklung im Uhrzeigersinn windet und eine Wicklung sich gegen den Uhrzeigersinn windet.

11. Ein induktiver Positionssensor (100) nach Anspruch 10, wobei die Wicklungen in gegenläufigen Reihen verbunden sind.

12. Ein induktiver Positionssensor (100) nach einem der Ansprüche 8 bis 11, wobei das erste Positionsangabesignal ein Winkel zwischen 0 und 180° ist und wobei das zweite Positionsangabesignal ein Winkel zwischen 0 und 360° ist und wobei die integrierte Schaltung (150) konfiguriert ist, um den Absolutwert der Differenz beider Signale anzunehmen und um die Position des Ziels als das erste Positionsangabesignal zu bestimmen, wenn die Differenz kleiner als 90° ist, und um die Position des Ziels als die Summe des ersten Positionssignals und 180° zu bestimmen, wenn die Differenz größer als 90° ist.

13. Ein Verfahren zum Erfassen der Winkelposition eines drehbaren Ziels, wobei das Verfahren Folgendes umfasst:

 - Anregen eines asymmetrischen Ziels durch ein alternierendes Magnetfeld, das wiederum ein Magnetfeld erzeugt, dessen Muster ein Magnetfeldmuster ist, Erfassen des Magnetfeldmusters, und Bestimmen einer Winkelposition aus dem erfassten Magnetfeldmuster, **dadurch gekennzeichnet, dass**
 - das asymmetrische Ziel so eingerichtet ist, dass es das Magnetfeldmuster erzeugt, dessen Stärke eine Periodizität mit einer ersten Periode in der Winkelrichtung und mit einer zweiten Periode in der Winkelrichtung aufweist, wobei die zweite Periode größer ist als die erste Periode, wobei ein innerer Teil des asymmetrischen Ziels eine periodische Konfiguration mit der ersten Periode in der Winkelrichtung aufweist, und wobei ein äußerer Teil des asymmetrischen Ziels, innerhalb eines ersten und eines zweiten Radius, eine periodische Konfiguration mit der zweiten Periode in der Winkelrichtung aufweist,
 - und dass Erfassen des Magnetfeldmusters beinhaltet, ein erstes Signal unter Verwendung einer ersten Empfangsspule oder eines ersten Satzes von Empfangsspulen, die bzw. der sich kontinuierlich mit der ersten Periode in Abhängigkeit von der Winkelposition des Ziels ändert, und ein zweites Signal unter Verwendung einer zweiten Empfangsspule oder eines zweiten Satzes von Empfangsspulen zu erhalten, die bzw. der sich kontinuierlich mit der zweiten Periode in Abhängigkeit von der Winkelposition des Ziels ändert, wobei die erste Empfangsspule oder der erste Satz von Empfangsspulen (130) innerhalb des ersten Radius eingerichtet ist und wobei die zweite Empfangsspule oder der zweite Satz von Empfangsspulen innerhalb des ersten und zweiten Radius eingerichtet ist,
- und dass die Winkelposition des Ziels durch Kombinieren des ersten und des zweiten Signals bestimmt wird.

## Revendications

1. Un capteur de position inductif (100) pour détecter la position angulaire d'une cible rotative (110), le capteur de position inductif (100) comprenant :

   • au moins une bobine émettrice (120) pour générer un champ magnétique alternatif dans une direction axiale, au moins une première bobine de réception ou un ensemble de bobines de réception (130, 160), au moins une seconde bobine de réception ou un ensemble de bobines de réception (140, 160),
   • une cible asymétrique (110),

   **caractérisé en ce qu'**une partie interne de la cible asymétrique a une configuration périodique avec une première période dans la direction angulaire, et dans lequel une partie externe de la cible asymétrique, entre un premier et un second rayon, a une configuration périodique avec une seconde période dans la direction angulaire, de telle sorte que, lorsque la cible asymétrique est excitée par le champ magnétique alternatif de la ou des bobines émettrices (120), la cible asymétrique générera à son tour un champ magnétique dont le motif est un motif de champ magnétique, qui a une intensité, mesurée dans une direction axiale, qui a une périodicité dans la direction angulaire composée de la première période et de la seconde période, dans lequel la seconde période est plus grande que la première période,

   • et **caractérisé en ce que** la ou les premières bobines de réception ou l'ensemble de premières bobines de réception (130, 160) sont configurées pour répondre au motif de champ magnétique avec la première période, induisant ainsi un premier signal qui varie en continu avec la première période en fonction de la position angulaire de la cible, et que la première bobine de réception ou le premier ensemble de bobines de réception (130) est disposé à l'intérieur du premier rayon,
   • et **caractérisé en ce que** la ou les secondes bobines de réception ou l'ensemble de secondes bobines de réception (140, 160) sont configurées pour répondre au motif de champ magnétique avec la seconde période, induisant ainsi un second signal qui varie en continu avec la seconde période en fonction de la position angulaire de la cible, et que la seconde bobine de réception ou le second ensemble de bobines de réception est disposé entre le premier et le second rayon,

   et **en ce que** le capteur de position inductif est configuré pour déterminer la position angulaire de la cible à partir des premier et second signaux.

2. Un capteur de position inductif (100) selon la revendication 1, dans lequel la ou les premières bobines de réception ou l'ensemble de premières bobines de réception (130, 160) et la ou les secondes bobines de réception ou l'ensemble de secondes bobines de réception (140, 160) ont au moins une bobine qui est partagée.

3. Un capteur de position inductif selon l'une quelconque des revendications précédentes, le capteur de position inductif comprenant un circuit intégré (150) électriquement connecté à la ou les bobines émettrices (120) pour exciter la bobine émettrice, et électriquement connecté aux bobines de réception (130, 140) pour obtenir le premier signal et le second signal, et pour dériver la position angulaire de la cible à partir de ces signaux.

4. Un capteur de position inductif (100) selon l'une quelconque des revendications précédentes, dans lequel la cible (110) comprend une pièce conductrice.

5. Un capteur de position inductif (100) selon l'une quelconque des revendications précédentes, dans lequel la cible (110) comprend une piste de circuit imprimé.

6. Un capteur de position inductif (100) selon la revendication 5, dans lequel la cible (110) comprend en outre des composants passifs connectés à la piste de circuit imprimé.

7. Un capteur de position inductif (100) selon l'une quelconque des revendications précédentes dans lequel la cible comprend du matériel magnétique.

8. Un capteur de position inductif (100) selon l'une quelconque des revendications précédentes, dans lequel la cible asymétrique peut être décomposée en une partie périodique de 180° et en une partie périodique de 360° de telle sorte que la première période soit de 180° et que la seconde période soit de 360°.

9. Un capteur de position inductif (100) selon l'une quelconque des revendications précédentes, dans lequel le premier ensemble de bobines de réception comprend au moins 2 bobines, chacune comprenant au moins 2 boucles, dans lequel une boucle spirale dans le sens horaire, et une boucle spirale dans le sens antihoraire.

10. Un capteur de position inductif (100) selon l'une quelconque des revendications précédentes, dans lequel le second ensemble de bobines de réception comprend au moins 2 bobines, chacune comprenant au moins 2 boucles, dans lequel une boucle spirale dans le sens horaire, et une boucle spirale dans le sens antihoraire.

11. Un capteur de position inductif (100) selon la revendication 10 dans lequel les boucles sont connectées en anti-série.

12. Un capteur de position inductif (100) selon l'une quelconque des revendications 8 à 11, dans lequel le premier signal d'indication de position est un angle entre 0 et 180° et dans lequel le second signal d'indication de position est un angle entre 0 et 360° et dans lequel le circuit intégré (150) est configuré pour prendre la valeur absolue de la différence des deux signaux et pour déterminer la position de la cible comme le premier signal d'indication de position si la différence est inférieure à 90°, et pour déterminer la position de la cible comme la somme du premier signal de position et de 180° si la différence est supérieure à 90°.

13. Un procédé pour détecter la position angulaire d'une cible rotative, le procédé comprenant :

   • l'excitation d'une cible asymétrique par un champ magnétique alternatif, qui à son tour génère un champ magnétique dont le motif est un motif de champ magnétique, la détection du motif de champ magnétique, et la détermination d'une position angulaire à partir du motif de champ magnétique détecté, **caractérisé en ce que**
   • la cible asymétrique est disposée de telle manière qu'elle génère le motif de champ magnétique dont l'intensité présente une périodicité avec une première période dans la direction angulaire et avec une deuxième période dans la direction angulaire, dans lequel la deuxième période est plus grande que la première période, dans lequel une partie interne de la cible asymétrique présente une configuration périodique avec la première période dans la direction angulaire, et dans lequel une partie externe de la cible asymétrique, entre un premier et un deuxième rayon, présente une configuration périodique avec la deuxième période dans la direction angulaire,
   • et **en ce que** la détection du motif de champ magnétique implique l'obtention d'un premier signal, en utilisant une première bobine de réception ou un premier ensemble de bobines de réception, qui varie continuellement avec la première période en fonction de la position angulaire de la cible, et d'un deuxième signal, en utilisant une deuxième bobine de réception ou un deuxième ensemble de bobines de réception, qui varie continuellement avec la deuxième période en fonction de la position angulaire de la cible, dans lequel la première bobine de réception ou le premier ensemble de bobines de réception (130) est disposé à l'intérieur du premier rayon et dans lequel la deuxième bobine de réception ou le deuxième ensemble de bobines de réception est disposé entre le premier et le deuxième rayon,
• et **en ce que** la position angulaire de la cible est déterminée en combinant le premier et le deuxième signal.

**FIG. 1**

**FIG. 2**

**Internal Rx Signals at 1.2 mm Air Gap**

FIG. 3

**External Rx Signals at 1.2 mm Air Gap**

FIG. 4

**Typical Examples of** $\alpha_{180}$ **and** $\alpha_{360}$

FIG. 5

110

110a
110b

**FIG. 6**

110

110b
110a

**FIG. 7**

110

**FIG. 8**

110

110b

110a

111

112

**FIG. 9**

110 —

114 —

115

116 —

**FIG. 10**

110 —

**FIG. 11**

**FIG. 12**

**FIG. 13**

**FIG. 14**

**Typical Examples of $\alpha_{180}$ and $\alpha_{360}$**

*FIG. 15*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014029885 A1
- DE 602004012649
- DE 102014006420 A1
- DE 69636712 T2
- DE 69810504 T2
- US 2008319703 A1